(19) Europäisches Patentamt
European Patent Office
Office européen des brevets

(11) EP 3 798 842 A1

(12) EUROPEAN PATENT APPLICATION
published in accordance with Art. 153(4) EPC

(43) Date of publication:
31.03.2021 Bulletin 2021/13

(51) Int Cl.:
*G06F 11/14* (2006.01)

(21) Application number: 19797973.5

(86) International application number:
PCT/CN2019/099121

(22) Date of filing: 02.08.2019

(87) International publication number:
WO 2020/119143 (18.06.2020 Gazette 2020/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.12.2018 CN 201811504797

(71) Applicant: XIAMEN MEIYA PICO INFORMATION
CO., LTD
Xiamen, Fujian 361000 (CN)

(72) Inventors:
• LIANG, Derong
Xiamen, Fujian 361000 (CN)
• SHEN, Changda
Xiamen, Fujian 361000 (CN)
• WU, Shaohua
Xiamen, Fujian 361000 (CN)

(74) Representative: Petraz, Gilberto Luigi et al
GLP S.r.l.
Viale Europa Unita, 171
33100 Udine (IT)

(54) **DATABASE DELETED RECORD RECOVERY METHOD AND SYSTEM**

(57) The present disclosure provides a method, a system and computer storage medium for recovering deleted records of a database. The method includes steps of obtaining a slot pointer value; obtaining at least one deleted record according to the slot pointer value and the current offset address; parsing and recovering at least one deleted record. According to the method, system and computer storage medium of the present disclosure, deleted records could be recovered fast and completely based on the changes of the actual data after the deletion of records.

400

Fig. 4

**Description**

The present application claims the priority of the Chinese Patent Application No. 201811504797.3 filed on Dec. 10, 2018, the entire disclosure of which is incorporated herein by reference.

TECHNICAL FIELD

This application relates to the field of computer technology, and specifically to information security.

BACKGROUND

SQL Server is a relational database developed by Microsoft Corporation. Due to the popularity of Microsoft's WINDOWS operating systems, the excellent compatibility between SQL Server database and WINDOWS operating systems, and the good stability thereof, SQL Server database has become one of the most popular databases. Therefore, the recovery of the deleted records of the SQL Server database in the field of information security has always been a hot spot of concern. There are only a few log-based online recovery methods or manual recovery methods by database administrators on the market, and there is no related technology on offline recovery.

Therefore, in the prior art, there is a defect that the deleted records cannot be recovered offline.

SUMMARY

The present disclosure has been proposed in consideration of the above problems, and provides a method, a system and computer storage medium for recovering deleted records of a database, in which deleted records could be recovered by parsing data files without running database service or dependence on whether the log files and the transaction are enabled.

According to an aspect of the present disclosure, a method for recovering deleted records of a database is provided, including:

obtaining a slot pointer value;
obtaining at least one deleted record according to the slot pointer value and a current offset address;
parsing and recovering at least one deleted record;
optionally, obtaining a slot pointer list of a data page; and traversing all slot pointers in the slot pointer list.

Optionally, said obtaining at least one deleted record according to the slot pointer value and the current offset address, comprises:

comparing the slot pointer value with the current offset address, and determining that there are deleted records before the slot pointer value if the current offset address is smaller than the slot pointer value;
and setting the current offset address to be an offset address, and reading the offset address to obtain a first deleted record.

Optionally, said obtaining at least one deleted record according to the slot pointer value and the current offset address further comprises: repeatedly determining whether there are other deleted records before the slot pointer value if the first deleted record is successfully parsed.

Optionally, said determining whether there are other deleted records before the slot pointer comprises:

setting the offset address to equal to the result of the current offset address plus the length of the current record;
comparing the slot pointer value with the offset address, and reading the offset address to obtain other deleted records before the pointer value if the offset address is smaller than the current slot pointer value.

Optionally, said obtaining at least one deleted record according to the slot pointer value and the current offset address further includes: stopping the repeated determination of whether there are other deleted records before the slot pointer value when parsing other deleted records before the slot pointer value fails or the offset address is not less than the slot pointer value.

Optionally, said obtaining at least one deleted record according to the slot pointer value and the current offset address further includes: determining whether the slot pointer value is reset, if parsing the first deleted record or other deleted records before the slot pointer value fails or the offset address is not less than the slot pointer value; setting the offset address to be the slot pointer value if the slot pointer value equals 0;

determining whether the slot pointer is the first slot pointer if the slot pointer value is not 0; and if the slot pointer is the first slot pointer, setting the offset address to be the initial value of the offset address, and if not, setting the offset address to be the result of the offset address of the previous slot pointer of the slot pointer plus the record length of the previous slot pointer;

and reading the offset address to obtain a second delete record.

Optionally, said obtaining at least one deleted record according to the slot pointer value and the current offset address further includes:

determining whether the slot pointer is the last slot pointer, and if the slot pointer is not the last slot pointer, obtaining the next slot pointer and acquiring at least one deleted record according to the next slot pointer value and the current offset address.

Optionally, said obtaining at least one deleted record according to the slot pointer value and the current offset address further includes:

If the slot pointer is the last slot pointer, setting the offset address to be the result of the current offset address plus the length of the current record;

determining whether the offset address is greater than or equal to the page size, and ending the process if the offset address is greater than or equal to the page size, and reading the offset address to obtain a third deleted record if not.

Optionally, said obtaining at least one deleted record according to the slot pointer value and the current offset address further includes:

ending the process if parsing the third deleted record fails; and if the third delete record is successfully parsed, repeatedly determining whether there are other deleted records after the slot pointer.

Optionally, said determining whether there are other deleted records after the slot pointer includes:

setting the offset address to be the result of the current offset address plus the length of the current record;

determining whether the offset address is greater than or equal to the page size, ending the process if the offset address is greater than or equal to the page size, and reading the offset address to obtain the other deleted records after the slot pointer if not.

Optionally, said obtaining at least one deleted record according to the slot pointer value and the current offset address further includes: when parsing other deleted records after the slot pointer value fails or the offset address is greater than or equal to the page size, stopping the repeated determination of whether there are other deleted records after the slot pointer.

According to another aspect of the present disclosure, a system for recovering the deleted records of the database is provided, including a storage device, a processor and program code stored in the storage device and executed on the processor, which is characterized by that the processor implements steps of the recovery method according to claims.

According to another aspect of the present disclosure, there is also provided a computer storage medium on which program instructions are stored, which is characterized by that the program instructions are executed by the computer to perform steps of the above-mentioned method.

In summary, according to the method, system and computer storage medium for recovering deleted records of a database of an embodiment of the present disclosure, deleted records could be recovered by parsing the data files without running the database service or dependence on whether the log files and the transaction are enabled.

BRIEF DESCRIPTION OF THE DRAWINGS

The embodiments of the present disclosure are described in details with drawings, making above and other objects, features and advantages of the present invention more apparent. The drawings are intended to provide a further understanding of the embodiments of the disclosure, and are used to explain the disclosure together with the embodiments of the present disclosure and are not intended to limit the disclosure. In the drawings, the same reference numerals generally refer to the same parts or steps.

Figure 1 is a schematic diagram of a data file structure according to an embodiment of the present disclosure;
Figure 2 is a schematic diagram of a data page structure according to an embodiment of the present disclosure;
Figure 3 is a schematic diagram of a data recording structure according to an embodiment of the present disclosure;
Figure 4 is a schematic flowchart of a method for recovering deleted records of a database according to an embodiment of the present disclosure;
Figure 5 is a schematic flowchart of an example of a method for recovering deleted records of a database according to an embodiment of the present disclosure;

Figure 6-13 are schematic diagrams of examples of a method for recovering deleted records of a database according to an embodiment of the present disclosure.

DETAILED DESCRIPTION

In order to make the objects, the technical solutions and the advantages of the present disclosure more apparent, the exemplary embodiments according to the present disclosure will be described in detail with reference to the accompanying drawings. Apparently, the described embodiments are only a part of the embodiments of the present disclosure, and are not intended to limit the present disclosure. All the other embodiments obtained by those skilled in the art based on the embodiments described in the present disclosure, without departing from the scope of the invention, should fall within the scope of the present disclosure.

SQL Server is a relational database developed by Microsoft Corporation, whose field types can be classified into fixed-length types and variable-length types. The main types of fixed-length field types are TinyInt, SmallInt, Int, BigInt, Float, Real, DateTime, Date, Time, Money, SamllMoney, Char, nChar, Binary, etc., while variable-length field types mainly include VarChar, nVarChar, VarBinary, Text, nText, Image and so on. The field contains the field name, field type, field length, etc., and the table structure contains the table name, primary keys, index, several fields and so on.

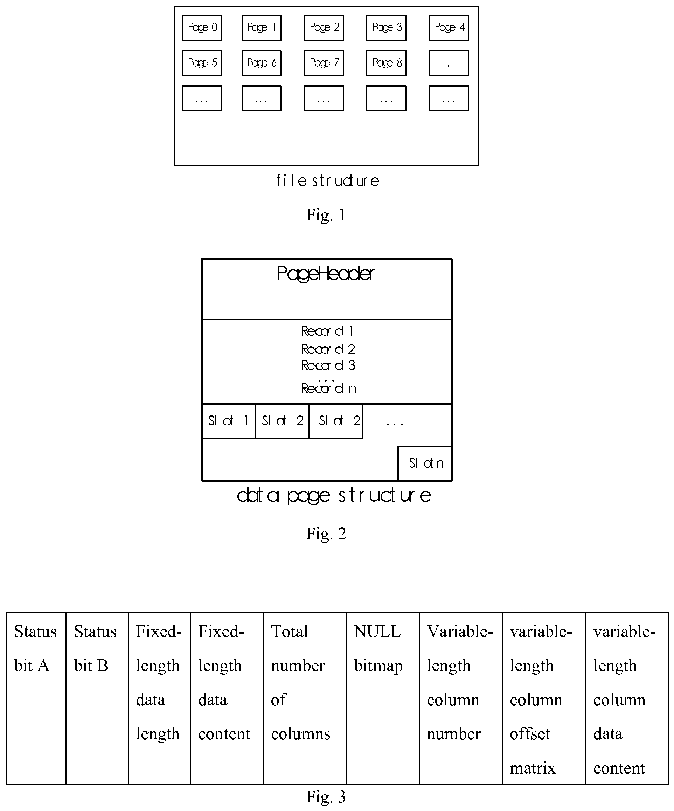

The SQL Server data files are usually named with a suffix MDF or NDF. The inside of the file is composed of pages as the basic unit, and the pages in the data file are sorted by page numbers from smallest to largest, as shown in Figure 1 which is a schematic diagram of a data file structure of an embodiment of the present disclosure.

The data pages are the basic unit of the data file. The page size of the page is usually 8192 bytes. A data file usually contains multiple types of pages, such as a file header page, a start-up page, a data page, an index page, and the like. The data pages are used to store records.

The data page consists of three parts: a 96-byte page header (PageHeader), a record list (Record), and slots pointing to the recording positions, and the number of the slots is recorded in the page header, as shown in Figure 2 which is a schematic diagram showing the structure of a data page of an embodiment of the present disclosure.

As shown in FIG. 3 which is a schematic diagram of a data recording structure of an embodiment of the present disclosure. The SQL Server record structure includes:

Status bit A: which occupies one byte, and contains the record type of the record, and indicates whether contains NULL bitmap or variable-length column information.

Status bit B: which occupies one byte.

Fixed-length data length: which occupies two bytes.

Fixed-length data content: in which the Fixed-length column data length (FixDataLen) is the sum of the lengths of each Fixed-length field.

Total number of columns (ColCount): which occupies two bytes.

NULL bitmap: whose length is ((ColCount +7)/8).

Variable-length column number (VarColCount): which occupies two bytes. variable-length column offset matrix: whose length is (VarColCount *2).

variable-length column data content: in which the variable-length column data length (VarDataLen) equals the end position of the variable-length column offset matrix minus the starting position of the variable-length column offset matrix.

Let bNullBit indicate whether there is a NULL bitmap, and let bNullBit = 1when there is a NULL bitmap, and let bNullBit = 0 when there is no NULL bitmap. Let bVarCol indicate whether there is a variable-length column. When there is a variable-length column, let bVarCol = 1, and there is no variable-length column when bVarCol=0. Then the calculation formula of the recording length (RecordLength) is:

$$RecordLength = FixDataLen + VarDataLen + (VarColCount\ *2) + bNullBit$$
$$*((ColCount\ +7)/8) + 6 + bVarCol*2.$$

The main types of SQL Server records include: Primary Record, including data records; Index Record, including records of index data records; and Forwared Record, including records with field data outside the record due to the updated content; Ghost Record, including records which are marked for deletion but have not actually been deleted yet.

In order to speed up the record deletion and subsequent rollback operation, SQL Server introduces the logical deletion of the records, which means the records are marked for deletion first and then the physical deletion is performed.

These records marked for deletion are ghost records. The physical deletion just clears the log slots without deleting the data. The physical deletion is performed at the end of the page and then the data is written. But not the data but the slot pointer is overwritten.

Based on the above principles, the embodiment of the present disclosure provides a method for recovering deleted records of a database by parsing the data files, which could recover deleted records without running the database service and independent on whether log files and the transaction are enabled.

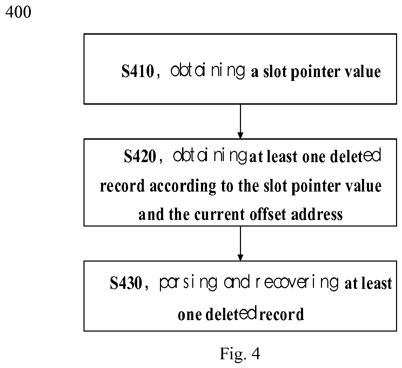

Above all, a schematic flowchart of a method for recovering deleted records of a database according to the embodiment of the present disclosure is described with reference to FIG. 4, including:

First, at step S410, obtaining a slot pointer value;
At step S420, obtaining at least one deleted record according to the slot pointer value and the current offset address;
Finally, at step S430, parsing and recovering at least one deleted record.

Optionally, obtaining a slot pointer list of the data page; traversing all slot pointers in the slot pointer list, which may ensure the deleted records are acquired completely and prevent from omitting the recovery of deleted data.

The deleted records can be obtained in different ways according to different record types. For the ghost records which are only marked for deletion but has not been deleted, the deleted record positions can be directly obtained through the slot pointers and the records can be parsed. In case that the slot pointer has been reset, which means the record slot has been reset without deleting the data, the position of the deleted record corresponding to the slot can be obtained and the record can be read and parsed by the way of adding the length of the previous record to the previous record position. In case that the slot pointer has been overwritten without data overwritten, the position and record length of the current record can be analyzed. If the result of the current record position plus the current record length is smaller than the next record position, it will be determined that there is a deleted record after the current record, the position of the deleted record will be located, and the record will be read and parsed.

Optionally, obtaining at least one deleted record according to the slot pointer value and the current offset address, includes:

Comparing the slot pointer value with the current offset address, and determining that there is a deleted record before the slot pointer value if the current offset address is smaller than the slot pointer value;
And making the offset address be the current offset address, and reading the offset address to obtain a first deleted record.

In the original data without deleted records, the slot pointer value equals the offset address, and if there is a deleted record before the value of a slot pointer, the offset address becomes smaller. That is, when the offset address is smaller than the slot pointer value, it indicates that there is a deleted record before the slot pointer. After reading the first deleted record before the slot pointer, it need to further determine repeatedly whether there is another deleted record before the slot pointer, until all the other deleted records existing before the slot pointer are determined or parsing the deleting records fails.

Parsing the deleted record successfully depends on at least one of the three conditions: the total number of columns in the record structure consistent with the field number of the table structure, the number of variable-length fields in the record structure consistent with the number of variable-length fields in the table structure, and the length of the fixed-length data in the record structure consistent with the sum of the lengths of all the fixed-length fields of the table structure.

Optionally, obtaining at least one deleted record according to the slot pointer value and the current offset address further includes: repeatedly determining whether there are other deleted records before the slot pointer if the first deleted record is successfully parsed.

Optionally, determining whether there are other deleted records before the slot pointer includes:

Setting the offset address to equal the result of the current offset address plus the length of the current record;
Comparing the slot pointer value with the offset address, and reading the offset address to obtain other deleted records before the pointer value if the offset address is smaller than the current slot pointer value, .

Optionally, obtaining at least one deleted record according to the slot pointer value and the current offset address further includes: stopping the repeated determination of whether there are other deleted records before the slot pointer as parsing other deleted records before the slot pointer value fails or the offset address is not less than the slot pointer value.

If the slot pointer value is reset without the data deleted, and the slot pointer is read as 0, the position of the deleted record corresponding to the slot may be obtained by adding the length of the previous record to the previous record position, and reading and parsing the record is performed. Further it could be determined whether the slot finger is the first slot pointer. And if not, it would be determined that the position of the deleted record corresponding to the slot is obtained by adding the length of the previous record to the previous record position, and reading and parsing the record is performed. And if the slot finger is the first slot pointer and the first slot pointer is reset, the position of the deleted record begins after the 96-byte PageHeader, and hence the initial value of the offset address can be 96.

Optionally, obtaining at least one deleted record according to the slot pointer value and the current offset address further includes: determining whether the slot pointer value is reset, if parsing the first deleted record or other deleted records before the slot pointer value fails or the offset address is not less than the slot pointer value;

setting the offset address to be the slot pointer value if the slot pointer value equals 0;

determining whether the slot pointer is the first slot pointer if the slot pointer value is not 0; if the slot pointer is the first slot pointer, setting the offset address to be the initial value of the offset address, and if not, setting the offset address to be the result of the offset address of the previous slot pointer of the slot pointer plus the record length of the previous slot pointer;

And reading the offset address to obtain a second delete record.

Optionally, the initial value of the offset address is 96. Further, if the first slot pointer is greater than 96, it indicates there are deleted records before the first slot pointer position.

Optionally, obtaining at least one deleted record according to the slot pointer value and the current offset address further includes:

Determining whether the slot pointer is the last slot pointer, and if the slot pointer is not the last slot pointer, obtaining the next slot pointer and acquiring at least one deleted record according to the next slot pointer value and the current offset address.

Since the data is written after the physical deletion at the end of the page, the data is not overwritten, but the slot pointer is overwritten. Hence when the slot pointer is confirmed to be the last slot pointer, the current record position and record length are analyzed. If the result of the current record position plus the current record length is less than the next record position, it is determined that there is a delete record after the current record, and then the deleted record is located, read and parsed.

Optionally, obtaining at least one deleted record according to the slot pointer value and the current offset address further includes:

If the slot pointer is the last slot pointer, setting the offset address to be the result of the current offset address plus the length of the current record;

Determining whether the offset address is greater than or equal to the page size, and ending the process if the offset address is greater than or equal to a page size, and reading the offset address to obtain a third deleted record if not.

Optionally, obtaining at least one deleted record according to the slot pointer value and the current offset address further includes:

ending the process if parsing the third deleted record fails; and if the third delete record is successfully parsed, repeatedly determining whether there are other deleted records after the slot pointer.

Optionally, determining whether there are other deleted records after the slot pointer includes:

Setting the offset address to be the result of the current offset address plus the length of the current record;

Determining whether the offset address is greater than or equal to the page size, ending the process if the offset address is greater than or equal to the page size, and reading the offset address to obtain the other deleted records after the slot pointer if not.

Optionally, obtaining at least one deleted record according to the slot pointer value and the current offset address further includes: when parsing other deleted records after the slot pointer value fails or the offset address is greater than or equal to the page size, stopping the repeated determination of whether there are other deleted records after the slot pointer.

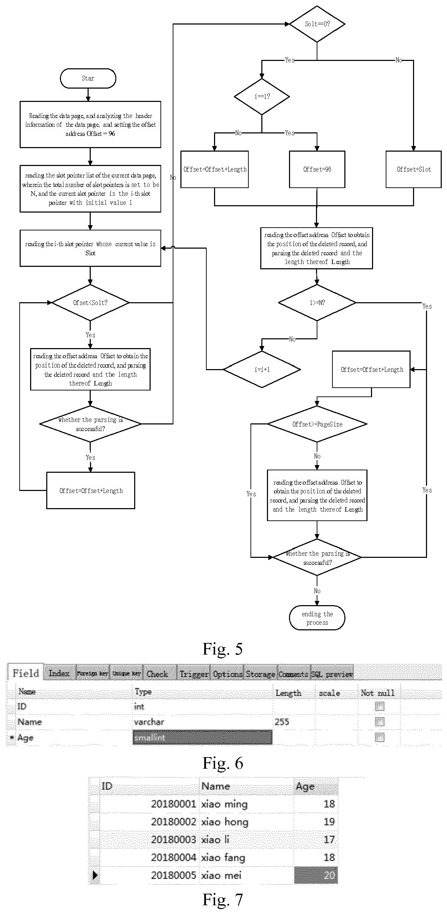

The method for recovering the deleted records of the database in the embodiment of the present disclosure is further described with reference to FIG. 5 which is a schematic flowchart of an example of the method for recovering the deleted records of the database according to the embodiment of the present disclosure.

Step S51, reading the data page, and analyzing the header information of the data page; and setting the offset address Offset = 96;

Step S52, reading the slot pointer list of the current data page, wherein the total number of slot pointers is set to be N, the traversal starts from the first slot pointer, and the current slot pointer is the i-th slot pointer ;

Step S53, reading the i-th slot pointer, that is, the current slot pointer value Slot;

step S54, determining whether the current slot pointer value Slot is greater than the offset address Offset, and if the current slot pointer value Slot is greater than Offset which indicates there are deleted records before the i-th slot pointer, performing step S55, and if not, performing step S56;

Step S55, reading the offset address Offset to obtain the position of the deleted record, and parsing the deleted record: If the parsing is successful, setting the offset address Offset=Offset+Length, and Length is the current record length, in order to determine whether there are other deleted records before the current i-th slot pointer; and repeating step S54;and if the parsing fails, performing step S56;

Step S56, determining whether the current slot pointer value Slot, that is, the i-th slot pointer is reset, specifically including: determining whether Slot equals 0, and if Slot equals 0, executing step S57; and if Slot is not 0, setting Offset = Slot and executing step S58;

Step S57, determining whether the i-th slot pointer is the first slot, specifically comprising: determining whether i equals 1, and if i equals 1, setting the offset address Offset = 96, and if i is not 1, setting Offset = Offset+Length, where Length is the length of the current record, and performing step S58;

Step S58, reading and parsing the current record, and obtaining the length of the current record Length;

Step S59, determining whether the i-th slot pointer is the last slot, specifically including: determining whether i is greater than or equal to N, and if the i-th slot pointer is the last slot, executing S510, and if the ith slot pointer is not the last slot, then setting i=i+1 and repeating step 53;

Step S510, setting Offset=Offset+Length, determining whether Offset is greater than or equal to the page size PageSize, and ending the process if Offset is greater than or equal to PageSize, and performing step S511 if not;

Step S511, reading the position of Offset and parsing the record and obtaining the length of the current record Length; repeating step S510 if the parsing is successful, and ending the process if the parsing fails.

In one embodiment, referring to FIGS. 6-13 which are schematic diagrams showing an example of a method for recovering deleted records of a database according to an embodiment of the present disclosure, the method for recovering deleted records of a database of the embodiment will be further explained with specific examples. Details as follows:

Firstly, creating a test database test.mdf;

Secondly, creating a test table 'student' in the test.mdf database, wherein the table 'student' contains three fields: the first field with field name ID and field type Int, the second field with field name Name and field type VarChar, and the third field with field name Age and field type SamllInt, as shown in FIG. 6;

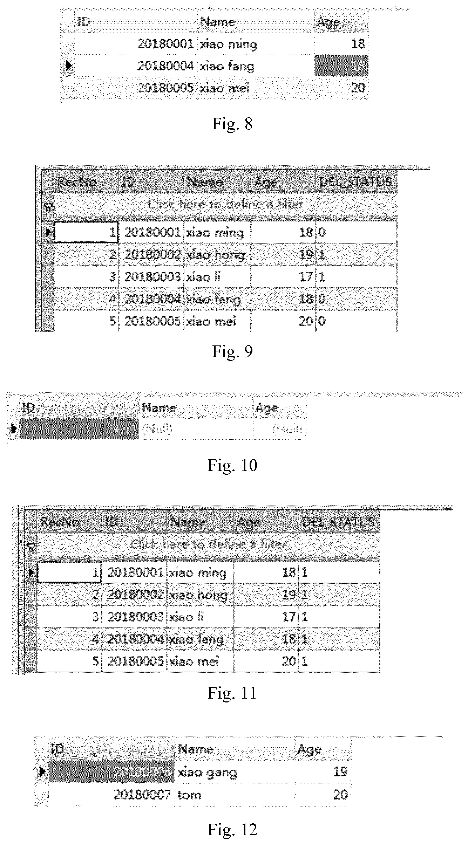

Thirdly, inserting several records into the table 'student', as shown in Figure 7; deleting the 2nd and 3rd records, The deleted table data is as shown in FIG. 8; and recovering the deleted records according to the recovery method of the embodiment of the present disclosure, wherein the database after deletion is as shown in FIG. 8, and the recovery result is shown in FIG. 9;

Then, deleting all the records of the table 'student', and recovering the deleted records according to the recovery method of the embodiment of the present disclosure, wherein the table database after deletion is as shown in FIG. 10 and the recovery result is as shown in FIG. 11;

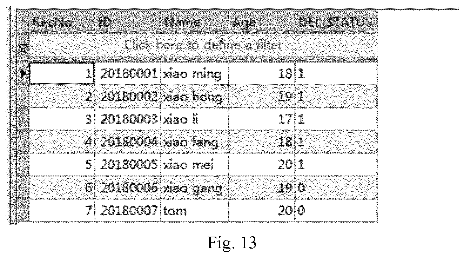

Next, inserting two more pieces of data into the table, and recovering according to the the recovery method of the embodiment of the present disclosure, wherein the table after inserting data is as shown in FIG. 12, and the recovery result is as shown in FIG. 13.

It can be seen that according to the method for recovering deleted records of data of the embodiment of the present disclosure, deleted records could be recovered by parsing the data files without running the database service or dependence on whether the log files and the transaction are enabled.

Those of ordinary skill in the art will appreciate that the elements and algorithm steps of the various examples described with the embodiments disclosed herein can be implemented by electronic hardware or a combination of computer software and electronic hardware. Whether these functions are performed in hardware or software depends on the specific application and design constraints of the solution. A person skilled in the art can use different methods to implement the described functions for each particular application, but such implementation should not be considered to be beyond the scope of the present disclosure.

According to another aspect of the present disclosure, a recovery system for deleted records of a database is provided, including a storage device, and a processor.

The storage device stores program code for implementing respective steps in the recovery method for deleted records of a database according to an embodiment of the present disclosure.

The processor is configured to execute program code stored in the storage device to perform respective steps of the above-described recovery method for deleted records of a database according to an embodiment of the present disclosure.

In one embodiment, the respective steps of the recovery method for deleted records of a database according to an embodiment of the present disclosure are performed when the program code is executed by the processor.

Further, according to an embodiment of the present disclosure, there is also provided a storage medium on which program instructions are stored, for performing respective steps of the recovery method for deleted records of a database according to an embodiment of the present disclosure when the program instructions are executed by a computer or a processor. And the storage medium is also used for a recovery system according to a recovery method for deleted records of a database according to an embodiment of the present disclosure. The computer readable storage medium can be any combination of one or more computer readable storage medium. For example, a computer readable storage medium includes computer readable program code for randomly generating a sequence of action instructions, while another computer readable storage medium contains computer readable program code for performing recovery of deleted records of the database .

In one embodiment, the computer program instructions may be executed by a computer to implement the recovery method of deleted records of the database according to an embodiment of the present disclosure.

In summary, according to a method, system and computer storage medium for recovering deleted records of a database of an embodiment of the present disclosure, deleted records could be recovered by parsing the data files without running the database service or dependence on whether the log files and the transaction are enabled.

Although the exemplary embodiments are described herein with reference to the drawings, and it should be understood that the embodiments are only illustrative and are not intended to limit the present disclosure. A person skilled in the art can make various changes and modifications therein without departing from the scope and spirit of the disclosure. All such changes and modifications are intended to be included within the scope of the present disclosure as claimed.

The above description is only for the specific embodiments of the present disclosure or the description of the specific embodiments, and the scope of the disclosure is not limited thereto, and changes and substitutions made by any person skilled in the art easily within the technical scope disclosed by the disclosure are intended to be included within the scope of the present disclosure. The scope of protection of the disclosure should be determined by the scope of the claims.

**Claims**

1.  A method for recovering deleted records of a database, **characterized in** including:

    obtaining a slot pointer value;
    obtaining at least one deleted record according to the slot pointer value and the current offset address;
    parsing and recovering at least one deleted record.

2.  A method according to claim 1, **characterized in** further including:
    obtaining a slot pointer list of the data page; and traversing all slot pointers in the slot pointer list.

3.  A method according to claim 1, **characterized in that** said obtaining at least one deleted record according to the slot pointer value and the current offset address includes:

    comparing the slot pointer value with the current offset address, and if the current offset address is smaller than the slot pointer value, determining that there are deleted records before the slot pointer value;
    and setting the offset address to be the current offset address, and reading the offset address to obtain a first deleted record.

4.  A method according to claim 3, **characterized in that** said obtaining at least one deleted record according to the slot pointer value and the current offset address further includes:
    repeatedly determining whether there are other deleted records before the slot pointer, if the first deleted record is successfully parsed.

5.  A method according to claim 4, **characterized in that** said determining whether there are other deleted records before the slot pointer includes:

    setting the offset address to equal the result of the current offset address plus the length of the current record;
    comparing the slot pointer value with the offset address, and if the offset address is smaller than the current slot pointer value, reading the offset address to obtain other deleted records before the pointer value.

**6.** A method according to claim 5, **characterized in that** said obtaining at least one deleted record according to the slot pointer value and the current offset address further includes:
stopping the repeated determination of whether there are other deleted records before the slot pointer value, when parsing other deleted records before the slot pointer value fails or the offset address is not less than the slot pointer value.

**7.** A method according to claim 6, **characterized in that** said obtaining at least one deleted record according to the slot pointer value and the current offset address further includes:

determining whether the slot pointer value is reset to 0, if parsing the first deleted record or other deleted records before the slot pointer value fails or the offset address is not less than the slot pointer value;
setting the offset address to be the slot pointer value if the slot pointer value equals 0;
determining whether the slot pointer is the first slot pointer if the slot pointer value is not 0; and if the slot pointer is the first slot pointer, setting the offset address to be the initial value of the offset address, and if not, setting the offset address to be the result of the offset address of the previous slot pointer of the slot pointer plus the record length of the previous slot pointer;
and reading the offset address to obtain a second deleted record.

**8.** A method according to claim 7, **characterized in that** said obtaining at least one deleted record according to the slot pointer value and the current offset address further includes:
determining whether the slot pointer is the last slot pointer, and if the slot pointer is not the last slot pointer, obtaining the next slot pointer and acquiring at least one deleted record according to the next slot pointer value and the current offset address.

**9.** A method according to claim 8, **characterized in that** said obtaining at least one deleted record according to the slot pointer value and the current offset address further includes:

if the slot pointer is the last slot pointer, setting the offset address to be the result of the current offset address plus the length of the current record;
determining whether the offset address is greater than or equal to the page size, and ending the process if the offset address is greater than or equal to the page size, and reading the offset address to obtain a third deleted record if not.

**10.** A method according to claim 9, **characterized in that** said obtaining at least one deleted record according to the slot pointer value and the current offset address further includes:
ending the process if parsing the third deleted record fails; and if the third delete record is successfully parsed, repeatedly determining whether there are other deleted records after the slot pointer.

**11.** A method according to claim 10, **characterized in that** said determining whether there are other deleted records after the slot pointer includes:

setting the offset address to be the result of the current offset address plus the length of the current record;
determining whether the offset address is greater than or equal to the page size, ending the process if the offset address is greater than or equal to the page size, and reading the offset address to obtain the other deleted records after the slot pointer if not.

**12.** A method according to claim 11, **characterized in that** said obtaining at least one deleted record according to the slot pointer value and the current offset address further includes:
when parsing other deleted records after the slot pointer value fails or the offset address is greater than or equal to the page size, stopping the repeated determination of whether there are other deleted records after the slot pointer.

**13.** A system for recovering deleted records of a database, including a storage device, a processor and program code stored in the storage device and executed on the processor, **characterized in that** the processor implements steps of the method according to anyone of claims 1-12.

**14.** A computer storage medium, on which program instructions are stored, **characterized in that** the program instructions are executed by the computer to perform steps of the method according to anyone of claims 1-12.

| | | | | |
|---|---|---|---|---|
| Page 0 | Page 1 | Page 2 | Page 3 | Page 4 |
| Page 5 | Page 6 | Page 7 | Page 8 | ... |
| ... | ... | ... | ... | ... |

file structure

Fig. 1

| PageHeader |
|---|
| Record 1<br>Record 2<br>Record 3<br>...<br>Record n |

| Slot 1 | Slot 2 | Slot 2 | ... | |
|---|---|---|---|---|
| | | | | Slot n |

data page structure

Fig. 2

| Status bit A | Status bit B | Fixed-length data length | Fixed-length data content | Total number of columns | NULL bitmap | Variable-length column number | variable-length column offset matrix | variable-length column data content |
|---|---|---|---|---|---|---|---|---|
| | | | | | | | | |

Fig. 3

400

S410, obtaining a slot pointer value

S420, obtaining at least one deleted record according to the slot pointer value and the current offset address

S430, parsing and recovering at least one deleted record

Fig. 4

Fig. 5

Fig. 6

Fig. 7

| ID | Name | Age |
|---|---|---|
| 20180001 | xiao ming | 18 |
| 20180004 | xiao fang | 18 |
| 20180005 | xiao mei | 20 |

Fig. 8

| RecNo | ID | Name | Age | DEL_STATUS |
|---|---|---|---|---|
| | | Click here to define a filter | | |
| 1 | 20180001 | xiao ming | 18 | 0 |
| 2 | 20180002 | xiao hong | 19 | 1 |
| 3 | 20180003 | xiao li | 17 | 1 |
| 4 | 20180004 | xiao fang | 18 | 0 |
| 5 | 20180005 | xiao mei | 20 | 0 |

Fig. 9

| ID | Name | Age |
|---|---|---|
| (Null) | (Null) | (Null) |

Fig. 10

| RecNo | ID | Name | Age | DEL_STATUS |
|---|---|---|---|---|
| | | Click here to define a filter | | |
| 1 | 20180001 | xiao ming | 18 | 1 |
| 2 | 20180002 | xiao hong | 19 | 1 |
| 3 | 20180003 | xiao li | 17 | 1 |
| 4 | 20180004 | xiao fang | 18 | 1 |
| 5 | 20180005 | xiao mei | 20 | 1 |

Fig. 11

| ID | Name | Age |
|---|---|---|
| 20180006 | xiao gang | 19 |
| 20180007 | tom | 20 |

Fig. 12

13

| RecNo | ID | Name | Age | DEL_STATUS |
|---|---|---|---|---|
| | | Click here to define a filter | | |
| 1 | 20180001 | xiao ming | 18 | 1 |
| 2 | 20180002 | xiao hong | 19 | 1 |
| 3 | 20180003 | xiao li | 17 | 1 |
| 4 | 20180004 | xiao fang | 18 | 1 |
| 5 | 20180005 | xiao mei | 20 | 1 |
| 6 | 20180006 | xiao gang | 19 | 0 |
| 7 | 20180007 | tom | 20 | 0 |

Fig. 13

## INTERNATIONAL SEARCH REPORT

| International application No. |
|---|
| **PCT/CN2019/099121** |

| A. | CLASSIFICATION OF SUBJECT MATTER |
|---|---|

G06F 11/14(2006.01)i

According to International Patent Classification (IPC) or to both national classification and IPC

| B. | FIELDS SEARCHED |
|---|---|

Minimum documentation searched (classification system followed by classification symbols)
G06F

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: Database, 数据, 记录, 表项, 条目, 槽, 页, 对象, 删除, 恢复, 复用, 找回, 离线, 指针, 指示符, 编号, 偏移, 地址, 位置, 遍历, database, SQL server, MySQL, item, record, data, object, target, slot, page, delet+, recover+, offline, pointer, indicator, offset, address, travers+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 109753382 A (XIAMEN MEIYA PICO INFORMATION CO., LTD.) 14 May 2019 (2019-05-14) <br> claims 1-14 | 1-14 |
| X | CN 108062358 A (XIAMEN MEIYA PICO INFORMATION CO., LTD.) 22 May 2018 (2018-05-22) <br> description, paragraphs [0052]-[0056] and [0062]-[0136] | 1, 2, 13, 14 |
| X | CN 104199888 A (XIAMEN MEIYA PICO INFORMATION CO., LTD.) 10 December 2014 (2014-12-10) <br> description, paragraphs [0006]-[0010] | 1, 13, 14 |
| A | CN 101504660 A (TSINGHUA UNIVERSITY) 12 August 2009 (2009-08-12) <br> entire document | 1-14 |
| A | US 5682513 A (INTERNATIONAL BUSINESS MACHINES CORPORATION) 28 October 1997 (1997-10-28) <br> entire document | 1-14 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 September 2019** | **30 October 2019** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/099121**

| Patent document cited in search report | | | Publication date (day/month/year) | Patent family member(s) | Publication date (day/month/year) |
|---|---|---|---|---|---|
| CN | 109753382 | A | 14 May 2019 | None | |
| CN | 108062358 | A | 22 May 2018 | None | |
| CN | 104199888 | A | 10 December 2014 | None | |
| CN | 101504660 | A | 12 August 2009 | None | |
| US | 5682513 | A | 28 October 1997 | None | |

Form PCT/ISA/210 (patent family annex) (January 2015)

**REFERENCES CITED IN THE DESCRIPTION**

**Patent documents cited in the description**

- CN 201811504797